# EUROPEAN PATENT APPLICATION

(11) **EP 2 335 858 A2**
(43) Date of publication of application: **22.06.2011**
(21) Application number: 10192420.7
(22) Date of filing: 24.11.2010
(51) Int. Cl.: B23K 9/20

(54) **Joining tool and holding device therefor**

(30) Priority: 16.12.2009 DE 202009017009 U
(71) Applicant: Newfrey LLC, Newark, Delaware 19711 (US)
(72) Inventor: Schug, Alexander, 35394 Giessen (DE); Schulz, Udo, 35394 Giessen (DE); Steinmüller, Florian, 35394 Giessen (DE)
(74) Representative: Witte, Weller & Partner

(57) **Abstract**

A holding device (30) of a joining tool (11) for holding a fastening arrangement (16) to be joined to a workpiece (18) is, the fastening arrangement (16) having a clip (20) and a stud (22) premounted thereon and extending along a longitudinal axis (23), the holding device (30) having at least one clip-holder finger (52) for bearing against the clip (20) and at least two stud-holder fingers (46) for bearing against the stud (22), the stud-holder fingers (46) being arranged so as to be offset in the circumferential direction with respect to the clip-holder finger (52). The stud-holder fingers (46) extend in the longitudinal direction from a stud-holder basic body (44) and can be widened elastically with respect to one another in the radial direction, so that the holding device (30) for receiving and holding the fastening arrangement (16) can be pushed onto the fastening arrangement (16) in the longitudinal direction.

## Description

The present invention relates to a holding device of a joining tool for holding a fastening arrangement to be joined to a workpiece, the fastening arrangement having a clip and a stud premounted thereon and extending along a longitudinal axis, the holding device having at least one clip-holder finger for bearing against the clip and at least two stud-holder fingers for bearing against the stud, the stud-holder fingers being arranged so as to be offset in the circumferential direction with respect to the clip-holder finger.

Furthermore, the present invention relates to a joining tool for joining fastening arrangements to workpieces, the joining tool having a holding device.

Finally, the present invention relates to a fastening arrangement with a clip and with a stud premounted thereon and extending along a longitudinal axis, the clip having a flange portion which preferably bears against a stud flange, and a main portion which extends from the flange portion in the longitudinal direction and on which are formed a plurality of wings arranged so as to be distributed about the longitudinal axis, a sheet-like component, such as a trim component, to be fastened being capable of being secured between the flange portion and the wings.

Fastening arrangements of the type designated above are often used for fastening trims to the underside of a body (what are known as UBF clips, "Under Body Fasteners"). In this case, the fastening arrangement with the clip and with the stud premounted thereon is joined to the workpiece in the form of a body panel, in particular by means of what is known as stud welding.

While conventional stud welding involves a process in which first a stud is welded to a workpiece and then a clip can be fastened to the stud, the fastening arrangements referred to above are welded in the premounted state to workpieces.

The clip of the fastening arrangement has between the wings radial recesses into which clip-holder fingers and, offset in the circumferential direction, stud-holder fingers engage. The stud-holder fingers in this case contact the stud received in a stud receptacle of the clip, so that an electrical welding current can be conducted from the stud-holder fingers to the stud.

The holding devices used for holding fastening arrangements of this type have in this case clip-holder fingers movable, open and shut, motively and, offset in the circumferential direction thereto, stud-holder fingers movable, open and shut, motively. These holding devices are used in conjunction with automatic joining systems in which a joining tool is guided, for example, by means of a robot.

Furthermore, in the fastening arrangements mentioned in the introduction, there is the problem that the available contact surface between the stud-holder finger and stud shank is relatively small.

Against this background, the object of the invention is to specify an improved holding device of a joining tool, an improved joining tool and an improved fastening arrangement.

In the case of the holding device, mentioned in the introduction, of a joining tool, the above object is achieved in that the stud-holder fingers extend in the longitudinal direction from a stud-holder basic body and can be widened elastically with respect to one another in the radial direction, so that the holding device can be pushed in a longitudinal direction onto the fastening arrangement in order to receive and hold the fastening arrangement.

By virtue of this measure, the holding device as a whole is simplified. There is no need for an actuator assembly for the actuation of stud-holder fingers. The holding device is therefore also suitable, for example, in conjunction with joining tools in the form of hand-held joining guns. However, the holding device can also be used in conjunction with joining tools which are guided automatically, for example by means of a robot.

Furthermore, the above object is achieved by means of a joining tool with a holding device of this type.

Finally, the above object is achieved by means of a fastening arrangement of the type mentioned in the introduction, a shank portion of a stud shank of the stud projecting out of the main portion of the clip, so that this projecting shank portion can be contacted over a large area by a holding device of a joining tool.

Whereas, in fastening arrangements of the prior art, the shank portion of the stud is generally surrounded over the entire circumference and also on the end face by the stud receptacle of a main portion of the clip, so that contacting by stud-holder fingers is possibly only via relatively small radial contacting recesses, it becomes possible, as a result of the projecting shank portion, to contact the stud over a large area. In this case, the electrical transition resistance falls and, therefore, joining processes become more efficient.

In general, the holding device according to the invention, the joining tool according to the invention and the fastening arrangement according to the invention are suitable, in particular, for joining processes which are based on what is known as stud welding. Alternatively, however, it is also possible to apply the invention to other joining processes, for example to adhesive bonding processes, thermoplastic joining processes, etc. In these instances, too, it may be expedient or necessary to conduct an electrical current into the stud, for example in order to heat this. It may in this case be advantageous to provide a thermal insulation between the stud and the clip.

The object is thus achieved in full.

In the holding device according to the invention, it is especially advantageous if the at least one clip-holder finger extends in the longitudinal direction from a clip-holder basic body.

As a result of this measure, too, the holding device can be simplified in mechanical terms.

Furthermore, it is in this case advantageous if the clip-holder basic body has an axial perforation, through which the stud-holder fingers extend.

In this embodiment, it is structurally possible in a comparatively simple way to guide the stud-holder fingers through the clip-holder basic body with a spacing which corresponds to a shank portion of the stud.

Furthermore, it is advantageous if the clip-holder basic body is secured to the stud-holder basic body.

This may take place, for example, by means of a radially extending connecting pin which passes through corresponding pin bores in the clip-holder basic body and in the stud-holder basic body.

Furthermore, it is preferable if the clip-holder basic body and the stud-holder basic body are secured to one another positively in a linear direction via corresponding shoulders, so that the linear forces occurring during the joining process can be transmitted from the stud-holder basic body, via the clip-holder basic body and the clip, to a stud flange of the stud.

Admittedly, it is generally also possible to make a corresponding positive connection between the stud-holder fingers and the stud. However, the indirect positive connection via the clip holder and the clip, on the one hand, can be implemented in a markedly more robust way in mechanical terms and, moreover, has high process reliability.

According to a further preferred embodiment, the stud-holder fingers are part of a stud holder which is rigidly connected to a slide element linearly displaceable in the holding device.

The rigid connection may take place, for example, via a thread. The slide element is preferably designed for carrying an electrical current and conducting it into the stud holder.

According to a further preferred embodiment, the clip has two radial contacting recesses, through which the stud-holder fingers engage.

Consequently, an electrical current can be conducted via the stud-holder fingers into the stud, for example in order to carry out a stud-welding process.

The stud holder is preferably formed in one piece with the stud-holder fingers. Correspondingly, the clip holder, including the clip-holder fingers, is preferably formed in one piece. The stud holder is preferably produced from metal. The clip holder is preferably produced from an electrically insulating material, for example from plastic.

In the fastening arrangement according to the invention, any holding device may be used, for example a holding device according to the invention. Alternatively, however, it is also possible to hold a fastening arrangement of this type by means of a holding device of the prior art. In this case, it is possible to design the stud-holder fingers so that they contact the stud shank over a large area.

It will be appreciated that the features mentioned above and those yet to be explained below can be used not only in the combination specified in each case, but also in other combinations or alone, without departing from the scope of the present invention.

Exemplary embodiments of the invention are illustrated in the drawing and are explained in more detail in the following description. In the drawing:
Fig. 1 shows a diagrammatical illustration of a joining system with a joining tool according to the invention for joining a fastening arrangement to a workpiece;
Fig. 2 shows an exploded view of an embodiment of a holding device according to the invention;
Fig. 3 shows a view of the holding device of Fig. 2 from below, with an inserted fastening arrangement;
Fig. 4 shows a sectional view along the line IV-IV of Fig. 3;
Fig. 5 shows a sectional view along the line V-V of Fig. 3;
Fig. 6 shows a side view of a fastening arrangement which can be held by means of the holding device of Figures 2 to 5;
Fig. 7 shows a view of the fastening arrangement of Fig. 6 from above;
Fig. 8 shows a sectional view along the line VIII-VIII of Fig. 7;
Fig. 9 shows a perspective view of the clip holder of Fig. 2 obliquely from above; and
Fig. 10 shows a diagrammatical illustration of a fastening arrangement according to the invention.

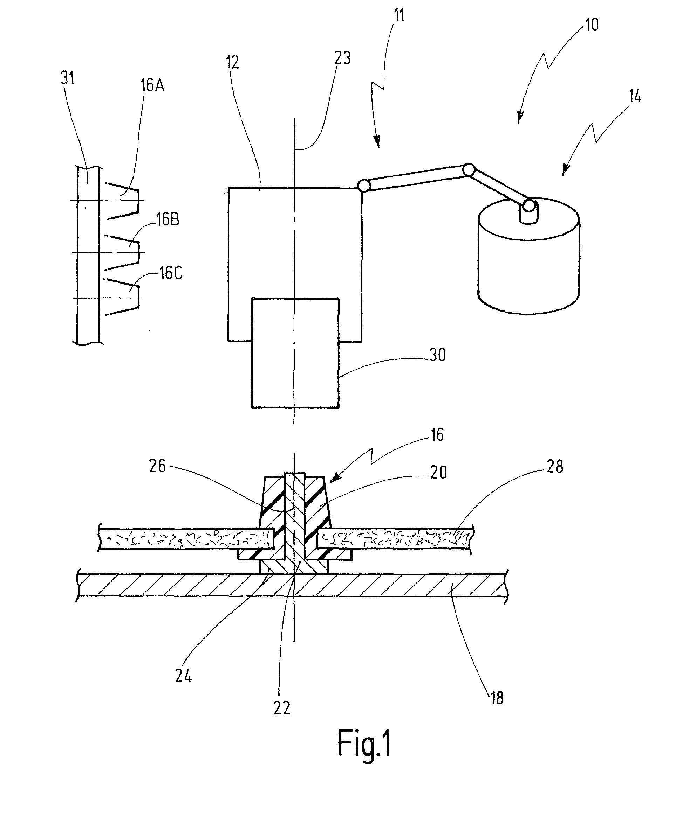

In Fig. 1, a joining system is designated in general by 10. The joining system 10 is designed, in particular, as a stud-welding system.

The joining system 10 contains a joining tool 11 having a joining head 12 which can be guided in an automated manner by means of a robot 14.

Alternatively to this, the joining tool 11 may also be designed as a hand-held joining tool.

Furthermore, Fig. 1 shows a fastening arrangement 16 which has been joined by means of the joining tool 11 to a workpiece 18, such as a body panel, by means of the stud-welding method known per se, for example.

The fastening arrangement 16 contains a plastic clip 20 and a stud 22 consisting of an electrically conductive and weldable material. The stud 22 is oriented along a longitudinal axis 23 which corresponds to a joining axis.

The stud 22 has a stud flange 24, by means of which the fastening arrangement 16 is joined to the workpiece 18. Furthermore, the stud 22 has a stud shank 26 which extends upwards from the stud flange 24. The clip 20 is secured to the stud shank 26 and preferably lies on a top side of the stud flange 24.

For the purpose of securing the clip 20 to the stud 22, the stud shank 26 may be provided with a thread, such as, for example, a coarse-pitch thread.

The clip 20 is designed for securing a sheet-like component, such as a trim component 28, in such a way that the latter is oriented essentially parallel to the workpiece.

The joining head 12 contains a holding device 30, indicated diagrammatically, which is designed in each case for holding a fastening arrangement 16 during a joining process.

Furthermore, the joining system 10 contains a magazine 31, on which a plurality of fastening arrangements 16A, 16B, 16C, ... are provided. The joining system 10 may be designed for moving the joining head 12 to the magazine 31, in order in each case to receive a new fastening arrangement and subsequently join it to a workpiece 18. Alternatively, the magazine may be provided on the joining head.

The joining process takes place as follows, using the example of stud-welding. First, a fastening arrangement 16 is received by the holding device 30. Subsequently, the joining head 12 is lowered in the direction of the workpiece 18 until the stud flange 24 contacts the workpiece 18. Thereafter, a pilot current is switched on, which flows from the joining head 12 through the holding device 30 and the stud 22 into the workpiece 18. The fastening device 16 is then lifted off from the workpiece 18, specifically either by means of the joining head 12 or by means of a linear-movement device which is provided in the joining head 12 and by means of which the holding device 30 can be moved in a linear direction. In this case, an arc is drawn between the stud flange 24 and the workpiece 18. Subsequently, a welding current is switched on, so that opposite faces of the stud flange 24 and of the workpiece 18 are fused. The fastening arrangement 16 is then lowered onto the workpiece 18 again, so that the melts of the fused surfaces are intermixed. The welding current is subsequently switched off. The overall melt solidifies, so that the stud 22 is connected to the workpiece 18 in a materially integral manner.

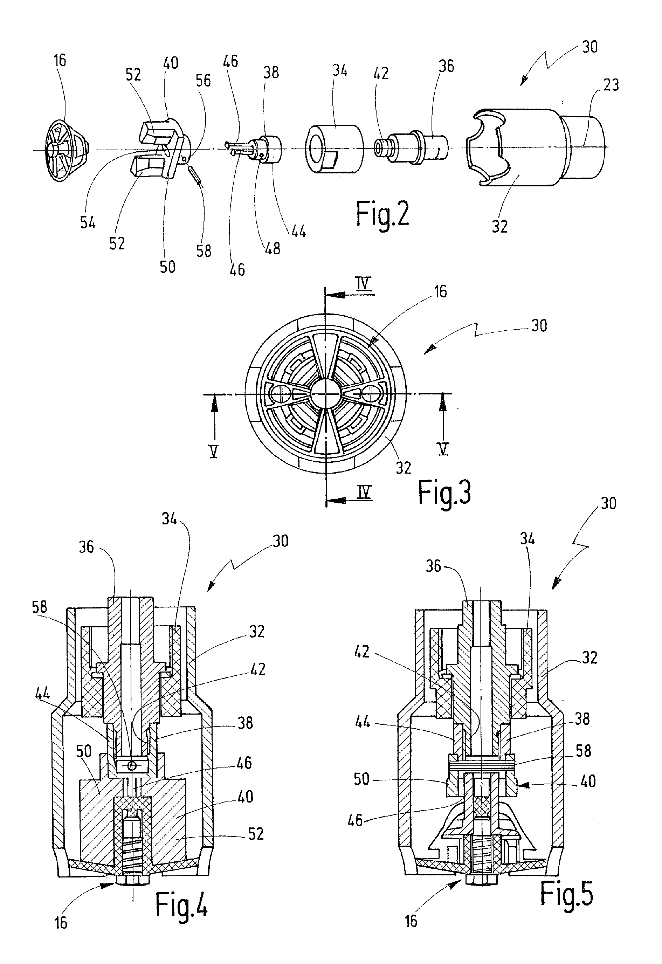

Figures 2 to 5 show an embodiment of a holding device 30 according to the invention.

The holding device 30 contains a mouthpiece 32. The mouthpiece 32 is preferably placed onto the workpiece 18 during a joining process, in order to achieve defined bearing contact. This is advantageous particularly during use in hand-held joining guns.

Furthermore, the holding device 30 has a holding sleeve 34 which is usually connected rigidly to the slide element 36 in the joining tool. A slide element 36 is mounted displaceably in a linear direction on the holding sleeve 34. The slide element 36 is movable in a linear direction by means of a linear-drive unit, for example by means of an electric motor or by means of a lifting magnet or by means of a spring arrangement with an assigned tensioning device.

The slide element 36 extends in a linear direction out of the holding sleeve 34 and is connected to a stud holder 38. A clip holder 40 is secured to the stud holder 38.

More specifically, the stud holder 38 is connected to the slide element 36 via a threaded portion 42. For this purpose, the stud holder 38 has a stud-holder basic body 44 which contains a depression having an internal thread.

Furthermore, the stud holder 38 has two stud-holder fingers 46 which are formed in one piece with the stud-holder basic body 44 and which extend from the latter in the longitudinal direction. In this case, the stud-holder fingers 46 are arranged on opposite sides of the longitudinal axis 12. The holder fingers 46 may be angled outwards at their ends (as illustrated), in order to form a larger abutment surface on the clip 20.

Furthermore, a radial bore 48 which serves for connection to the clip holder 40 is provided in the stud-holder basic body 44.

The clip holder 40 has a clip-holder basic body 50, from which two clip-holder fingers 52 extend. Furthermore, the clip-holder basic body 50 has an axial perforation 54, through which the stud-holder fingers 46 extend. The axial perforation 54 is in this case designed as a long hole. This is oriented transversely with respect to a connecting axis of the clip-holder fingers 52. The stud-holder fingers 46 are thus arranged so as to be offset in the circumferential direction with respect to the clip-holder fingers 52.

A radial bore 56 is provided in the clip-holder basic body 50. When the stud holder 38 is introduced into the clip holder 40, the radial bores 48, 56 are aligned with one another. A connecting pin 58 passes through the radial bores 48, 56, so that the clip holder 40 is secured rigidly to the stud holder 38.

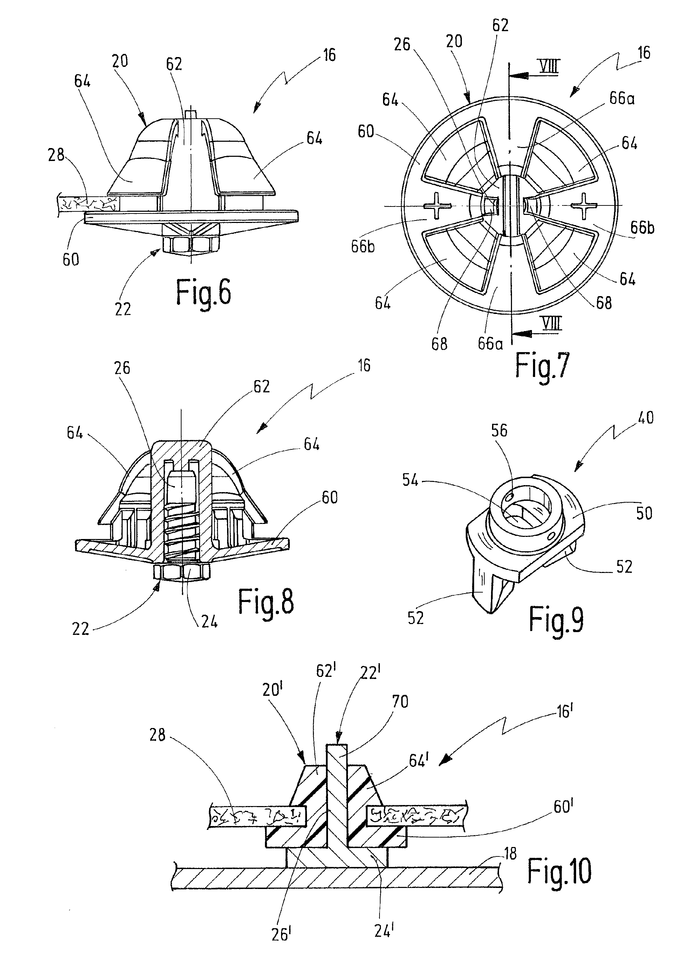

Figures 6 to 8 show a fastening arrangement which can be held by means of the holding device 30 of Figures 2 to 5. The clip 20 of the fastening arrangement 16 has a flange portion 60, the diameter of which is markedly larger than the diameter of the stud flange 24. Furthermore, the clip 20 has a main portion 62 extending upwards from the flange portion 60 in the longitudinal direction. The stud 22 is received in a stud receptacle, not designated in any more detail, of the main portion 62, as may be seen particularly in Fig. 8. In this case, the stud shank 26 is surrounded over the entire circumference by the main portion 62. A top side of the stud shank 26 is also covered by the main portion 62.

A plurality of wings 64, in the present case four wings 64, extend from the main portion 62. The wings 64 in this case extend from an upper end of the main portion 62 towards the flange portion 60, specifically in such a way that they define a conical shape widening in the direction of the flange portion 60. A sheet-like component 28 to be fastened has a recess, not designated in any more detail. The component 28 is then pushed onto the clip 20, so that the wings 64 penetrate through the recess in the component 28. The wings 64 may in this case be deformable elastically in a radial direction. In the state of final assembly, which is indicated diagrammatically in Fig. 6, the component 28 is received positively, and in a stable manner in terms of vibrations, between a top side of the flange portion 60 and undersides of the respective wings 64.

The wings 64 in each case spread over a circumferential angle of less than 90°. Respective radial recesses 66 are thus formed between the wings 64. The radial recesses 66 have two opposite first radial recesses 66a. The first radial recesses 66a are designed for receiving the clip-holder fingers 52. For this purpose, the clip-holder fingers 52 are designed to taper somewhat conically towards the longitudinal axis 23, so that a positive connection in the circumferential direction is set up between the clip-holder fingers 52 and the wings 64.

The radial recesses contain a second pair of radial recesses 66b. The main portion 62 is designed with contacting recesses 68 on the radially inner end of the second radial recesses 66b. The contacting recesses 68 extend in the longitudinal direction as far as the upper end of the main portion 62. Consequently, when the holding device 30 is being pushed onto the fastening arrangement 16, the stud-holder fingers 46 can be pushed from above into the contacting recesses 68 in such a way that they electrically contact outer circumferential portions of the shank portion 26.

Fig. 9 illustrates the clip holder 40 in perspective. It can be seen that the clip-holder basic body 50 has an annular portion through which the radial bore 56 passes. The axial perforation 54 for leading through the stud-holder fingers 46 is provided at the bottom of the annular portion.

Fig. 10 shows an embodiment according to the invention of a fastening arrangement 16'.

The fastening arrangement 16' corresponds basically, in terms of set-up and functioning, to the fastening arrangement 16 which is shown in Figures 6 to 8. Identical elements are therefore given the same reference numerals. Essentially, the differences are explained below.

In the fastening arrangement 16', a stud receptacle for receiving the stud shank 26' is of axially continuous design. Furthermore, the stud shank 26' has a length such that a portion 70 of the stud shank 26' projects with respect to a top side of the clip 20'.

It is thus possible to contact the projecting shank portion 70 over a large area by means of suitably designed stud-holder fingers 46, so that the electrical transition resistance can be kept low.

Appropriately adapted holding devices of the prior art or the holding device 30 of Figures 2 to 5 can therefore be used as a holding device for holding the fastening arrangement 16'. In the latter case, the stud-holder fingers 46 may be designed to be shorter and may have contact surfaces which contact the projecting shank portion 70 virtually over the entire circumference. Furthermore, contacting via the top side of the stud shank 26' may also be envisaged.

The projecting shank portion 70 may be held in any position, without being oriented in position, either by a gripper or a clamping receptacle. The projecting shank portion 70 may, furthermore, be provided with a bead or other positive geometries in order to increase a pull-off force.

Furthermore, it is conceivable to provide the main portion 62' of the clip 20' on the top side with an enlarged depression, so that stud-holder fingers 46 can be introduced between an inner circumference of this depression and the outer circumference of the shank portion 26'. In this case, it is possible that the projecting shank portion 70 projects with respect to the main portion 62' of the clip 20' in such a way that the projecting shank portion 70 projects from a bottom of such a depression, but does not protrude with respect to a top side of the clip 20'.

## Claims

1. Holding device (30) of a joining tool (11) for holding a fastening arrangement (16) to be joined to a workpiece (18), the fastening arrangement (16) having a clip (20) and a stud (22) premounted thereon and extending along a longitudinal axis (23), the holding device (30) having at least one clip-holder finger (52) for bearing against the clip (20) and at least two stud-holder fingers (46) for bearing against the stud (22), the stud-holder fingers (46) being arranged so as to be offset in the circumferential direction with respect to the clip-holder finger (52), **characterized in that** the stud-holder fingers (46) extend in the longitudinal direction from a stud-holder basic body (44) and can be widened elastically with respect to one another in the radial direction, so that the holding device (30) for receiving and holding the fastening arrangement (16) can be pushed onto the fastening arrangement (16) in the longitudinal direction.

2. Holding device according to Claim 1, **characterized in that** the at least one clip-holder finger (52) extends in the longitudinal direction from a clip-holder basic body (50).

3. Holding device according to Claim 2, **characterized in that** the clip-holder basic body (50) has an axial perforation (54), through which the stud-holder fingers (46) extend.

4. Holding device according to Claim 2 or 3, **characterized in that** the clip-holder basic body (50) is secured to the stud-holder basic body (44).

5. Holding device according to one of Claims 1 to 4, **characterized in that** the stud-holder fingers (46) are part of a stud holder (38) which is rigidly connected to a slide element (36) linearly displaceable in the holding device (30).

6. Holding device according to one of Claims 1 to 5, **characterized in that** the clip (20) has two radial contacting recesses (68), through which the stud-holder fingers (46) engage.

7. Joining tool (11) for joining fastening arrangements (16) to workpieces (18), the fastening arrangements (16) in each case having a clip (20) and a stud (22) premounted thereon and extending along a longitudinal axis (23), the joining tool (11) having a holding device (30) according to one of Claims 1 to 6.

8. Fastening arrangement (16') with a clip (20') and with a stud (22') premounted thereon and extending along a longitudinal axis, the clip (20') having a flange portion (60') and a main portion (62') which extends in the longitudinal direction from the flange portion (60') and on which are formed a plurality of wings (64') arranged so as to be distributed about the longitudinal axis, a sheet-like component (28) to be fastened being capable of being secured between the flange portion (60') and the wings (64'), **characterized in that** a shank portion (70) of a stud shank (26') of the stud (22') projects out of the main portion (62') of the clip (20'), so that this projecting shank portion (70) can be contacted over a large area by a holding device of a joining tool.
